Europäisches Patentamt

European Patent Office

Office européen des brevets

(19)

(11) Publication number: **0 038 165**
**B1**

(12) **EUROPEAN PATENT SPECIFICATION**

(45) Date of publication of patent specification: **25.07.84**

(51) Int. Cl.³: **G 02 F 1/17**

(21) Application number: **81301512.0**

(22) Date of filing: **07.04.81**

(54) Electro-optical device and electro-optical light controlling device.

(30) Priority: **15.04.80 JP 48657/80**
**18.04.80 JP 50324/80**
**06.11.80 JP 155213/80**

(43) Date of publication of application:
**21.10.81 Bulletin 81/42**

(45) Publication of the grant of the patent:
**25.07.84 Bulletin 84/30**

(84) Designated Contracting States:
**DE FR GB IT SE**

(56) References cited:
**DE - A - 2 814 824**
**GB - A - 1 535 594**
**US - A - 4 009 936**
**US - A - 4 018 508**

**IBM TECHNICAL DISCLOSURE BULLETIN, vol.
17, no. 10, March 1975, New York, US I.F.
CHANG and T.I. SUN: "Electrochromic
materials", pages 3144-3145**

(73) Proprietor: **ASAHI GLASS COMPANY LTD.**
**No. 1-2, Marunouchi 2-chome**
**Chiyoda-ku, Tokyo (JP)**

(72) Inventor: **Kamimori, Tadatoshi**
**3-28-25, Todoroki Setagaya-ku**
**Tokyo (JP)**
Inventor: **Mizuhashi, Mamoru**
**1219-47, Shiranecho Asahi-ku**
**Yokohama-shi, Kanagawa-ken (JP)**
Inventor: **Nagai, Junichi**
**No. 543, Sanmaicho Kanagawa-ku**
**Yokohama-shi, Kanagawa-ken (JP)**

(74) Representative: **Warden, John Christopher et al,
R.G.C. Jenkins & Co. 12-15, Fetter Lane
London EC4A 1PL (GB)**

Courier Press, Leamington Spa, England.

## Description

The present invention relates to an electro-optical device using a material having electrochromic properties and to an electro-optical light controlling device using an adhesive high polymer as an electrolyte to be capable of light-controlling over a large area.

Electro-optical devices utilizing electrochromic phenomena have been developed in practical applications for example for display devices of watches, in view of the excellent contrast obtainable and also for windows of buildings, vehicles, ships and aeroplanes as light controlling devices for controlling automatically or artificially as desired the amount of incident light such as sunlight.

Heretofore, it has been known to prepare an electro-optical device which comprises an electrochromic material of $WO_3$, $MoO_3$, $TiO_3$ or $Ir_2O_3$ and an electrolyte layer containing ions for coloring the electrochromic material which is held between a pair of electrodes. Such an arrangement has mainly been used for small size display devices.

Solid, liquid and semisolid electrolytes have been proposed for use in these devices. From the point of view of operability over a large area and a satisfactory percentage transmission modulation, the solid electrolytes cause slow response and a narrow modulation range and are in the form of multi coated layers, necessitating low productivity in manufacture. Moreover, it is difficult to achieve uniform characteristics over a large area. The liquid electrolytes cause difficulty in the preparation of the panel and in the inhibition of leakage of the electrolyte over a large area.

It has been proposed to use a gel electrolyte as the semi-solid electrolyte, in Japanese Patent Publication No. 43387/1979 wherein polyvinyl alcohol, polyacrylamide, ethyleneglycol, sodium silicate, silica gel or glycerine with sulfuric acid etc. is disclosed but these compounds have little or no tackiness whereby it is difficult to prepare a device having a large area. Moreover, there are difficulties of durability and handling since a high concentration of sulfuric acid is used.

The use of polystyrene, polyethylene, sulfonic acid and perfluorosulfonic acid is disclosed in G.B.—A 2,005,856, but they have less adhesive property whereby it is difficult to prepare a large panel. The use of copolymers of a vinyl monomer and a comonomer are disclosed in G.B.—A 2,014,326, but here the electrolytes contain a high content of water whereby there are difficulties of adhesiveness and durability.

Specification GB—A 1535594 discloses an electrochromic cell comprising an electrolyte layer held between a pair of electrodes, one of which has thereon an electrochromic material such as $WO_3$. The electrolyte layer may include an organic solvent and a chelating agent such as EDTA.

It is an object of the present invention to provide an electro-optical device and an electro-optical light controlling device having improved response characteristics at low voltage.

It is another object of the present invention in a particular embodiment to provide an electro-optical light controlling device having a large area and durability and capable of controlling the percentage transmission over a broad region. Further objects of the present invention are to provide an electro-optical light controlling device imparting uniform color density variation in a large area, and to provide an electro-optical light controlling device with improved response velocity for coloring and bleaching for a large area, to a satisfactory level for practical application.

The present invention provides an electro-optical device comprising a liquid or semisolid electrolyte layer held between a pair of electrodes and a solid electrochromic material placed on at least one of said electrodes, said electrolyte comprising an organic material and a chelating agent, characterized in that said electrolyte layer further comprises iodine or an iodine compound selected from metal or ammonium iodides, iodine-containing carboxylic acids having upto 4 carbon atoms, $C_1$—$C_4$ alkyl iodides and aromatic iodo compounds, in an amount from $5 \times 10^{-3}$ mole $l^{-1}$ up to saturation level.

In another aspect the invention provides an electro-optical light controlling device comprising a semisolid electrolyte layer held between a pair of light-transmissive electrodes and a solid electrochromic material placed on at least one of said electrodes, said semisolid electrolyte comprising an organic material and a compound capable of co-ordinating to the metal of the electrode, characterized in that said electrolyte layer also comprises a non-liquid adhesive high polymer, whereby the electrolyte layer adheres to the electrodes, and iodine or an iodine compound selected from metal or ammonium iodides, iodine-containing carboxylic acids having up to 4 carbon atoms, $C_1$—$C_4$ alkyl iodides and aromatic iodo compounds, in an amount from $5 \times 10^{-3}$ mole $l^{-1}$ up to saturation level.

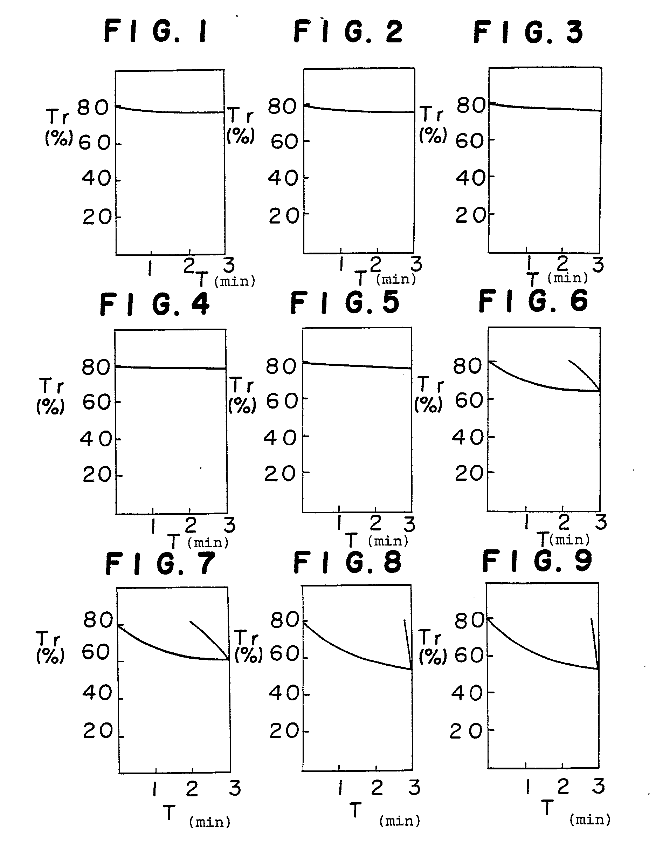

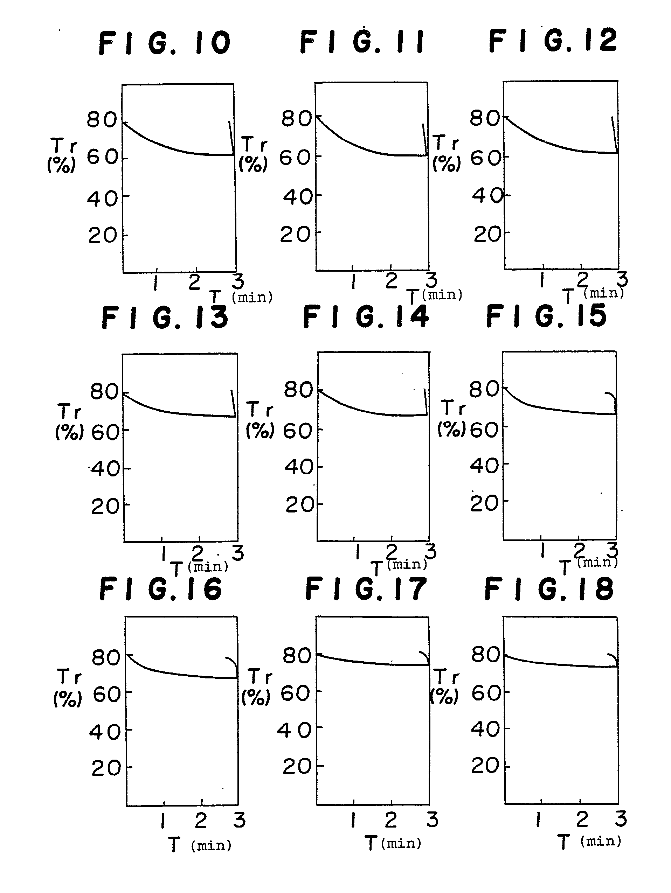

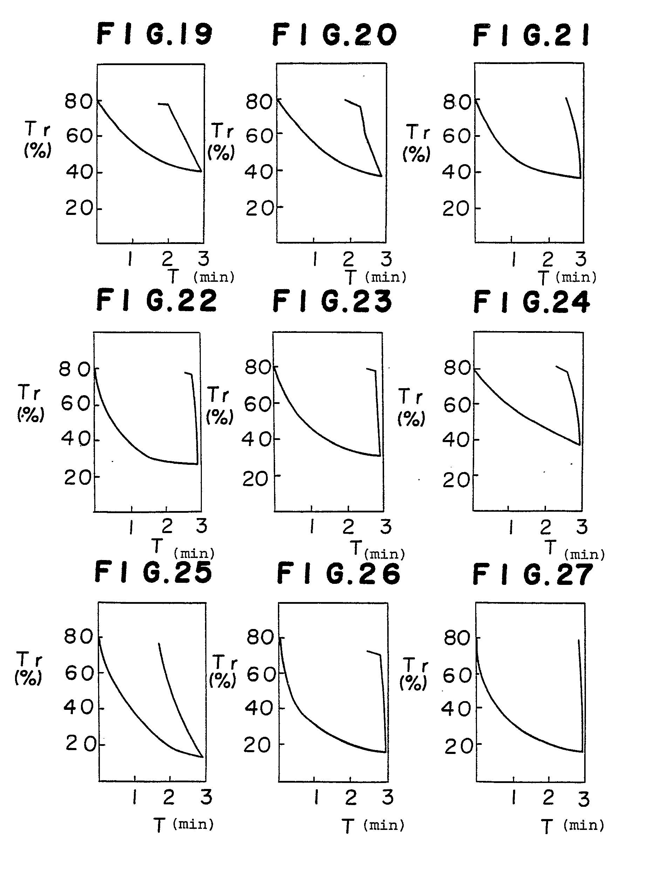

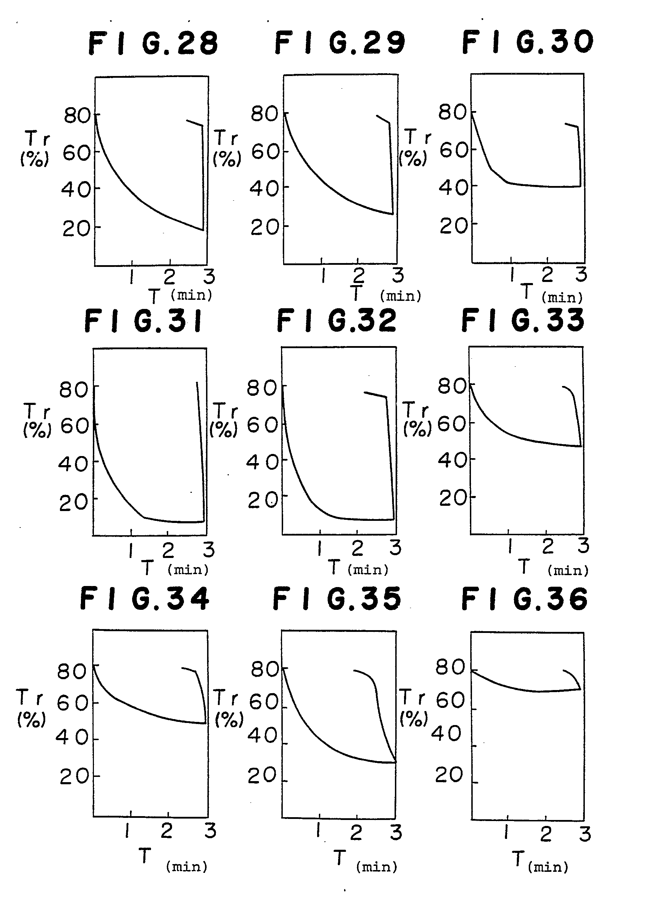

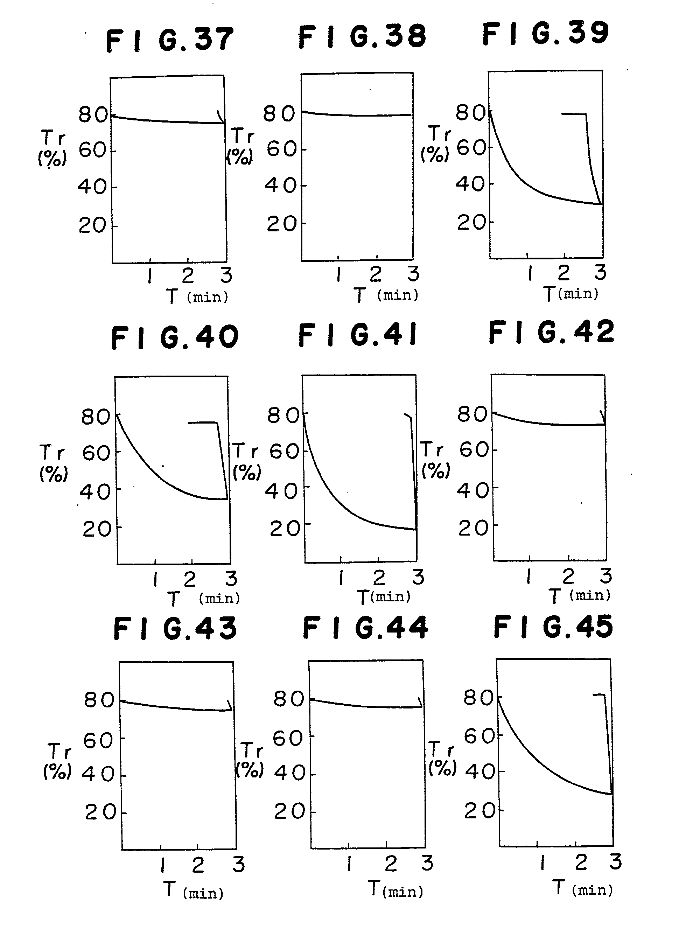

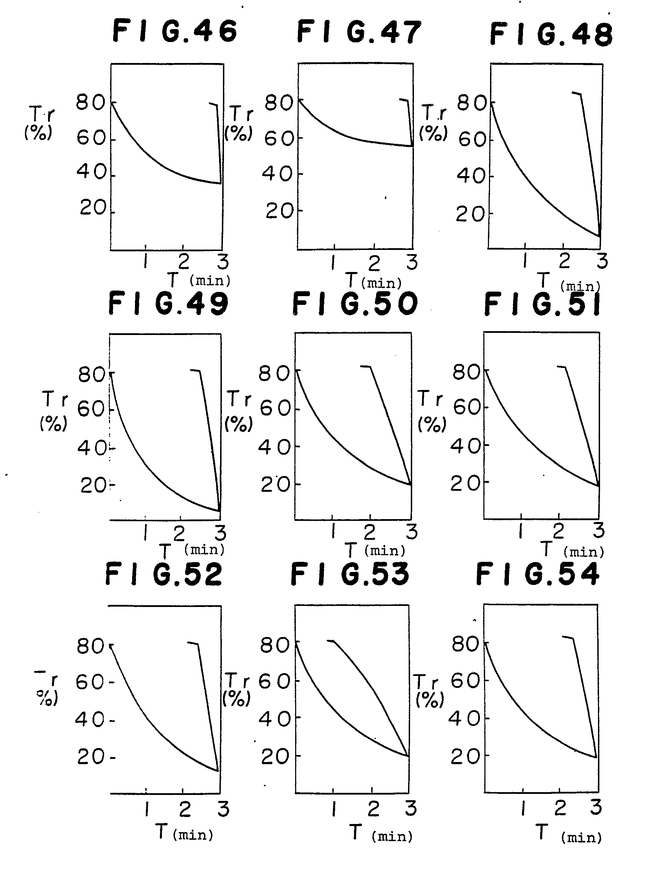

Figures 1 to 72 of the accompanying drawings are respectively graphs showing coloring and bleaching characteristics of the samples in the following examples and references.

An electrode used in the present invention comprises a substrate having an electrode layer. An electroconductive layer made of for example $In_2O_3$, $SnO_2$ or Au is formed on a substrate, usually made of a glass or plastics material. The electroconductive layer can usually be arranged over the whole of one surface of the substrate in the case of an electro-optical light controlling device. In a display device, the electroconductive layer can be arranged over a part of the surface or divided into a number of parts.

In detail, the electroconductive material such as $In_2O_3$, $SnO_2$ or $Cd_2SnO_4$ as a main component is placed on a transparent substrate such as a glass plate, polyester film or plastics substrate such as polycarbonate or polymethacrylate. A vacuum evaporation method, a sputtering method, a CVD

2

method, a spraying method or a CLD method can be applied in the case of the glass plate. A magnetron sputtering method, an ion-plating method, an ion beam sputtering method and other method in which a temperature of the substrate need not rise too high to form a layer having a thickness of 500 to 2,000 Å, can be used·in the case of a plastics substrate.

In the case of an electro-optical light controlling device, light-transmissive, preferably transparent, substrates are used and transparent electrode layers are used on both substrates. In the case of a display device, an opaque substrate can be used behind the display with an opaque electrode acting as a counter electrode. The electrochromic material layer is formed on an electroconductive layer of one of the electrodes. The thickness of the electrochromic material layer is selected according to the color desnity in coloring and is usually in a range of 1,000 to 10,000 Å.

The electroconductive layer of the other electrode is used as a counter electrode. In the case of the light controlling device, an electrochromic material layer which does not absorb in the visible region in either coloring or bleaching, can be used. In the case of the display device, any desired electrochromic material can be used.

The electrochromic material used in the present invention can be one of the above-mentioned known materials and is usually selected from $WO_3$ type materials. The electrochromic material has absorption in the visible region in coloring but no more than partial absorption in the visible region in bleaching. It is usually preferable to use an electrochromic material which has absorbption over the whole of the visible region in coloring so as to be opaque but is transparent over the whole of the visible region in bleaching. It is also possible to display special color patterns or symbols by using an electrochromic material having absorption only in a particular wavelength region or using a color filter.

The electrolyte layer of the present invention comprises an organic material and a compound capable of co-ordinating to the electrode metal. In a display device, and preferably also in other devices, this compound is a chelating agent. In a large size light controlling device, the organic material is preferably a liquid material and it contains high polymer having sufficient adhesion to cause the electrolyte to adhere to the electrodes. The electrolyte layer preferably comprises a chlorine-containing lower carboxylic acid or a bromine compound as a bleaching stabilizer, and it also comprises iodine or an iodine compound for improving low voltage actuation characteristics.

The co-ordinating compound improves the color responding characteristics. It is considered that a degree of co-ordination is formed by the ligand to the electrode metal to facilitate movement of electric charge on an electrode whereby the responsiveness is improved. The co-ordinating compounds can be in the form of neutral molecules or anions of elements in Group of VB, VIB or VIIB of the periodic table such as $NR_3$, $PR_3$, $S=CR_2$, $O=CR_2$ (R : H, alkyl group, phenyl group or other organic group), $NH_2^-$, $F^-$ and $CN^-$. The color response can be improved by the materials in certain degree. Among them, various chelating agent as multi-coordinate ligands are especially effective.

The chelating agents can be $\beta$-diketone derivatives such as acetyl acetone and benzoyl acetone; polyamines such as ethylenediamine, and triethylenetetraamine; oximes such as dimethylglyoxime; polycarboxylic acids such as oxalic acid, maleic acid and ethylenediamine tetraacetic acid; aminoacids such as glycine, and sulfur containing compounds such as thioglycolic acid, thiosalicylic acid and dimercaptopropanol.

The color accelerators as the materials having coordinating function to a metal impart their effect at a concentration of $5 \times 10^{-3}$ mol/liter to saturation. When it is less than $5 \times 10^{-3}$ mol/liter, the improvement of the response is not enough whereas when it is more than the saturated content, a precipitation is disadvantageously caused.

The response especially, the color response is improved by incorporating the additive itself, and it is further improved by incorporating a material for increasing a concentration or mobility of a proton ion or ion together with the additive.

The materials for increasing a concentration or mobility of protons can be inorganic acids such as sulfuric acid, hydrochloric acid and phosphoric acid; organic carboxylic acids such as formic acid, acetic acid, benzoic acid and trichloroacetic acid; organic sulfonic acid such as benzenesulfonic acid and toluenesulfonic acid; in organic bases such as LiOH and NaOH; organic bases such as n-propylamine; transition metal salts such as chromium acetate, nickel sulfate, iron chloride; organic salts such as ammonium acetate; fine oxide particles or sols of $SiO_2$, $Al_2O_3$ or $TiO_2$.

Among the materials for improving the response, the following bleaching stabilizers are especially suitable because the bleaching itself can be also improved.

The bleaching stabilizers can be chlorine-containing lower carboxylic acids and bromine compounds which improve the percentage transmission in the transmissive state in bleaching. Suitable bleaching stabilizers include chlorine or bromine-containing carboxylic acids having upto 4 carbon atoms such as trichloroacetic acid, dichloroacetic acid, monochloroacetic acid, tribromoacetic acid, dibromacetic acid, monobromoacetic acid, chloropropionic acid, bromopropionic acid, chlorobutyric acid and bromobutyric acid; alkyl bromides having upto 4 carbon atoms such as tetrabromomethane, tribromomethane, dibromomethane, monobromomethane, bromomethane, bromopropane; aromatic bromo compounds such as bromobenzene, bromophenol, dibromoaniline and tribromobenzoic acid and bromopyridine.

The bleaching stabilizer inhibits a yellow or brown coloring of the ITO electrode which can be

# O 038 165

caused by reducing the counter electrode in bleaching from a deep color. When the bleaching stabilizer is incorporated at a concentration from $1 \times 10^{-3}$ mol/liter upto a saturated concentration, the reduction of the ITO electrode in bleaching, and hence the potential, is decreased whereby complete bleaching is attained without the spontaneous coloring of the ITO electrode. This mechanism is not clearly understood, but it is considered to produce the effect by rendering unstable and separable the chelating agent on the ITO electrode surface.

According to the present invention, iodine or an iodine compound is incorporated in the electrolyte for decreasing the driving voltage.

The iodine compounds are selected from metal iodides such as lithium iodide, sodium iodide, manganese iodide, cobalt iodide, iron iodide, nickel iodide, zinc iodide and aluminum iodide; ammonium iodides; iodine-containing carboxylic acids having up to 4 carbon atoms such as monoiodoacetic acid; alkyl iodides having up to 4 carbon atoms such as monoiodomethane, tri-iodomethane and iodoethane; and aromatic iodo compounds such as iodobenzene, iodoaniline and iododioxybenzene.

The iodine compound is incorporated in an amount ranging from $5 \times 10^{-3}$ mol/liter to saturated concentration to decrease the driving voltage of the electrochromic device. When the iodine or iodine compound is combined with the bleaching stabilizer, the response, the low voltage driving property, the electrode deterioration resistance and life prolonging effect are improved.

When the content of the iodine or iodine compound is less than $5 \times 10^{-3}$ mol/liter, it has no substantial effect whereas when it is above the saturated concentration, precipitation occurs. The content is selected as desired within the above range. When the iodine or iodine compound is combined with a coloring accelerator, the response characteristic at low voltage is especially improved and the memory characteristic is satisfactory.

The type of organic electrolyte layer used is not critical and usually comprises a proton conductive solvent as a main component.

The proton conductive solvents used are preferably solvents having a high boiling point, a low solidification point and a large dielectric constant, for example alcohols having at least 3 carbon atoms, amide type solvents and propylene-carbonate.

The organic electrolytes used in the present invention for light-controlling devices are adhesive high polymers causing the electrolyte to the electrodes and enabling electrodes of large areas to be used.

Suitable high polymers (macromolecular compounds) include polyacrylic acid, polymethacrylic acid and their salts, esters or amides; and polysulfonic acid, polyvinyl alcohol, polyvinyl acetate, polyvinyl acetal, nylon, polyurethane, melamine, urea resins, and polyaminosilane and copolymers of the monomer thereof and a comonomer. These polymers have polar groups and adhesive properties.

Since a high polymer having adhesive properties is used in the electrolyte for a light controlling device, the electrolyte layer can be in a semisolid form whereby the difficulties in peripheral sealing, inlet sealing and constant spacing can be substantially overcome. Moreover, two electrodes adhere to the electrolyte layer where it is advantageously safe without scattering of broken pieces even when the electrode-substrates are broken by a strong shock.

The polyvinyl acetals such as polyvinyl butyral impart excellent adhesiveness, durability and response characteristics and impart excellent durability over a large area and both of the light controlling function and the safety function. When the semisolid electrolyte is used, the peripheral sealing of the device and the inlet sealing are much simpler than in the conventional device using a liquid electrolyte and can sometimes be dispensed with altogether whereby disadvantages such as deterioration caused by liquid leakage and an enlargement of the space between electrodes caused by bending of transparent substrates can be prevented, greatly improving safety.

In the light controlling device of the present invention, a high polymer is used. When the high polymer is soluble in the solvent, a solution of the organic electrolyte containing the additives can be coated on an electrode layer to a desired thickness by a meniscus coating method, a pulling up method, a spraying method, a spreading method or a spinner method and the coated layer is press-bonded to an electrode having an electrochromic material layer formed by a vacuum evaporation. If the high polymer can be in a film form, a film of the high polymer containing the additives is prepared and is pressed between both electrode plates.

When the high polymer is not soluble in a solvent, the additives are incorporated in a monomer and a curing agent is also incorporated to give a desired viscosity and the viscous solution is used. In the press-bonding, it is possible to apply a heat or a pressure if necessary.

It is also possible to incorporate a desired plasticizer, a viscous improver, a stabilizer, a filler or a pigment in order to improve handlings in the coating and press-bonding.

In order to give a constant space between the electrode plates, a plastic film, a glass fiber or glass beads at a constant thickness can be placed in the peripheral part or in the surface.

The counter electrode can be only electroconductive layer, however, the response characteristic at low voltage can be improved by forming a thin layer made of a transition compound such as transition metal oxides, nitrides or sulfides. It is especially effective to form a thin layer of FeO, NiO or CuO.

4

The device is prepared by assembling the electrode plates and the organic electrolyte layer.

In the case of a transmissive display device, transparent substrates and transparent electrodes are used in both sides. In the case of a reflective display device, a known porous background plate made of $Al_2O_3$ or a fluorinated resin is placed between both electrode substrates.

In the case of a liquid electrolyte, a pair of electrode plates are sealed with a sealant and the electrolyte is charged in the cell and the inlet is sealed. The sealants can be known sealants such as epoxy resins, fluorinated resins, silicone resins, glas frits etc. which do not adversely affect to the electrochromic material or the electrolyte in the curing step or the application.

When the electrolyte is a non-liquid composition comprising a high polymer, the electrolyte layer can be placed on the electrode plate. The end surfaces of the electrode plates are preferably sealed by coating a sealant such as epoxy resins, silicone resins, butyl rubber and polysulfide rubber to prevent a penetration of moisture or oxygen.

It is also possible to prepare the device as the liquid electrolyte device, by preparing a cell and charging a liquid monomer and sealing the inlet before the curing.

In the application of the device of the present invention, the glass, a hard plastic or a hard coated plastic is used as the substrate for electrode and the device can be used as a light controlling window for a building or a vehicle.

A flexible electro-optical device can be prepared by using a flexible plastic film as the substrate for electrode. The device can be placed in a laminated glass by bonding it on the glass plate. The bonding type electro-optical device which can be bonded to a substrate can be prepared by forming an abrasion resistant coating on the surface of the plastic film.

The coloring and bleaching mechanism of the electro-chromic material will be illustrated.

The coloring and bleaching mechanism of the electro-chromic material is a reversible reaction as shown by the following equation in the case of $WO_3$.

The reaction proceeds to the right when the display electrode is negative to cause coloring and to the left when the display electrode is positive to cause bleaching. The device using the electro-chromic material has a memory characteristic. When the display electrode is in a floating state the immediately preceding condition is maintained for a relatively long period so that power consumption can be small.

$$WO_3 + xH^+ + x\bar{e} \rightleftharpoons H\overset{+}{x} WO_3\ ex^-$$

As the outer electrode, $In_2O_3$ can be used. When the counter electrode is positive corresponding to the display electrode, the following reaction proceeds to the right, Ke representing a chelating agent.

$$In_2O_3 + xH^+Ke^- - xe^- \rightleftharpoons In_2O_3Ke_x + xH^+$$

The iodine compound used in the present invention is effective to decrease the driving voltage. The mechanism is not altogether clear and accordingly it is not shown in the reactions. Thus, when the iodine compound is combined with the coloring accelerator, the driving voltage can be remarkably decreased whereby the device may be actuated at about 1 Volt.

The present invention will be further illustrated by the following examples and references which are provided for purposes of illustration only and are not to be construed as limiting the present invention.

In the examples and references, each coloring electrode plate was prepared by a vacuum evaporation of $In_2O_3$ on a glass plate and vacuum evaporation of $WO_3$ onto the $In_2O_3$ layer. A counter electrode plate was prepared by vacuum evaporation of $In_2O_3$ onto a glass plate.

When a high polymer was used in the electrolyte layer, the high polymer was held between the pair of the electrode plates as a binder and subjected to pressure by gripping the electrode plates for 1 day to prepare each sample. When a liquid electrolyte was used, peripheral parts of the electrode plates were sealed with a resin to prepare each cell, the liquid electrolyte was charged and the inlet was sealed to prepared each sample. The effective area of the sample was 3 cm × 3 cm. Terminals were connected to the electrodes of each sample to apply a voltage between the electrodes and the coloring and bleaching response characteristic (percent transmission (TR : %) — response time (T: min)) was measured.

The results are shown in the graphs of Figs 1 to 72 wherein each ordinate represents the percentage transmission (100%), each abscissa represents time (minutes), each left hand curve shows a variation of percentage transmission for coloring on application of the voltage for 3 minutes and each right hand curve shows a variation of percentage transmission for bleaching on application of a voltage having reverse polarity at zero minutes. When the curve is discontinuous, an interruption in the voltage is indicated. The reference numerals of the graphs correspond to the test numbers.

Test Nos. 1 to 47, 55, 61, 62 and 67 to 69 relate to reference samples. Test Nos. 48 to 54, 56 to 60 and 63 to 66 illustrate examples of the invention.

Tests 1 to 7:

High polymers were respectively used as the electrolyte layer without an additive as references. The kinds of the high polymers and voltages applied are shown in Table 1.

TABLE 1

| Sample No. | High polymer | Voltage (V) |
|---|---|---|
| 1 | 30% dimethylformamide solution of polyvinyl alcohol | 2 |
| 2 | 30% isopropyl alcohol solution of polyacrylic acid | 2 |
| 3 | 30% toluene solution of polyvinyl acetate | 5 |
| 4 | 30% thinner solution of two liquid type urethane | 20 |
| 5 | 10 $\mu$m nylon film | 30 |
| 6 | 30% isopropyl alcohol solution of polyvinyl butyral (butyral value of 63%) | 2 |
| 7 | 30% of isopropyl alcohol solution of polyvinyl butyral (butyral value of 70%) | 2 |

As the results, Samples No. 1 to No. 5 had not a substantial change of the percent transmission whereby the samples could not be used as a transparent type display device nor a light controlling device.

Samples No. 6 and No. 7 had slight coloring and bleaching change. The variation of the percent transmission is only from 80% to 60%, thus being unsatisfatory.

Tests No. 8 to 14:

As the high polymer, 12.5% isopropyl alcohol solution of polyvinyl butyral (butyral value of 70%) was used and each of electrolytes such as acids and salts was incorporated at a ratio of 10 wt.% based on polyvinyl butyral as references. The kinds of the additives and voltages applied are shown in Table 2.

TABLE 2

| Sample No. | Additive | Voltage (V) |
|---|---|---|
| 8 | hydrochloric acid | 2 |
| 9 | sulfuric acid | 2 |
| 10 | trichloroacetic acid | 2 |
| 11 | p-toluenesulfonic acid | 2 |
| 12 | ammonium acetate | 2 |
| 13 | lithium hydroxide | 2 |
| 14 | silica sol | 2 |

The additives were effective for improving the response characteristic. Samples No. 8 to No. 14 had effect for increasing the bleaching velocity over those of Samples No. 6 and No. 7, however the coloring degrees of the samples were not satisfactory. The additive of Sample 10 is the typical

# 0 038 165

bleaching stabilizer however the addition of the additive did not result a statisfactory effect in a practical application.

Tests No. 15 to 18:

The other high polymers beside polyvinyl butyral were respectively used as references. The kinds of the high polymers, the additives and voltages applied are shown in Table 3.

TABLE 3

| No. | High polymer | Additive | Voltage (V) |
|---|---|---|---|
| 15 | 30% ethanol solution of polyvinyl alcohol | sulfuric acid | 2 |
| 16 | 30% isopropyl alcohol solution of polyacrylic acid | sulfuric acid | 2 |
| 17 | 30% toluene solution of polyvinyl acetate | p-toluene-sulfonic acid | 5 |
| 18 | 30% thinner solution of urethane | p-toluene-sulfonic acid | 5 |

The samples were prepared by adding additives to improve the response characteristic. Samples No. 15 to No. 18 imparted only slightly deep colors but could not be practically used.

Tests No. 19 to 32:

As the high polymer, 12.5% isopropyl alcohol solution of polyvinyl butyral (butyral value of 70%) was used and various additives were respectively incorporated and the devices were driven at a voltage of 2V.

In Samples No. 19 to No. 25, the material having coordinating function to a metal was incorporated at a ratio of 10 wt.% based on polyvinyl butyral. The kinds of additives are shown in Table 4.

In Samples No. 26 to No. 32, the chelating agent and the other additive were respectively incorporated at each ratio of 5 wt.% based on polyvinyl butyral. The kinds of the chelating agents and other additives are shown in Table 5.

TABLE 4

| Sample No. | Material having coordinating function |
|---|---|
| 19 | triphenylphosphine |
| 20 | thiourea |
| 21 | acetyl acetone |
| 22 | triethylenetetraamine |
| 23 | oxalic acid |
| 24 | dimethyl glyoxime |
| 25 | thiosalicylic acid |

7

# O 038 165

## TABLE 5

| Sample No. | Chelating agent | Additive |
|---|---|---|
| 26 | acetyl acetone | hydrochloric acid |
| 27 | acetyl acetone | trichloroacetic acid |
| 28 | acetyl acetone | p-toluenesulfonic acid |
| 29 | acetyl acetone | silica sol |
| 30 | acetyl acetone | lithium hydroxide |
| 31 | thiosalicylic acid | tribromoacetic acid |
| 32 | thiosalicylic acid | sulfuric acid |

Samples No. 19 to No. 25 had improved coloring characteristics. The percent transmissions in coloring were respectively less than 40% and the ratios of percent transmissions in coloring and bleaching were respectively more than 2. Among the samples, Sample No. 25 using thiosalicylic acid had the percent transmission of about 20% in coloring.

Samples No. 26 to No. 32 contained each of the additives for improving the response characteristic. Samples No. 27 and No. 31 incorporating the bleaching stabilizer imparted rapid bleaching to the original state without a permanent coloring by repeating the coloring and bleaching.

Tests No. 33 to 37:

The samples were prepared by using the high polymers beside polyvinyl butyral and incorporating the chelating agents. The kinds of the high polymers, the chelating agents and the voltages applied are shown in Table 6.

## TABLE 6

| Sample No. | High polymer | Chelating agent | Voltage (V) |
|---|---|---|---|
| 33 | 30% dimethylformamide solution of polyvinyl alcohol | salicylaldehyde 10 wt. % | 2 |
| 34 | 30% isopropyl alcohol solution of polyacrylic acid | oxalic acid 10 wt. % | 2 |
| 35 | 30% toluene solution of polyvinyl acetic acid | thiosalicylic acid 10 wt. % | 5 |
| 36 | 30% thinner solution of urethane | acetyl acetone 10 wt. % | 20 |
| 37 | 10 $\mu$m nylon film | ethyfene diamine 10 wt. % | 30 |

Samples No. 33 to 37 were formed by incorporating the chelating agents in the high polymers of Samples No. 1 to No. 5. The coloring characteristics were improved, but were inferior to those of Samples using polyvinyl butyral.

Tests No. 38 to 46

The samples were prepared by using butyl alcohol as the solvent without any high polymer and the devices were driven at a voltage of 2V or 1.5V.

The kinds of the chelating agents and the response improving additives are shown in Table .

8

## 0 038 165

TABLE 7

| Sample No. | Chelating agent | Additive | Voltage (V) |
|---|---|---|---|
| 38 | none | none | 2 |
| 39 | $\beta$-mercaptopropionic acid 0.1 M/liter | none | 1.5 |
| 40 | oxalic acid 0.1 M/liter | none | 2 |
| 41 | $\beta$-mercaptopropionic acid 0.1 M/liter | trichloroacetic acid 0.05 M/liter | 1.5 |
| 42 | none | trichloroacetic acid 0.05 M/liter | 1.5 |
| 43 | none | sulfuric acid 1 M/liter | 1.5 |
| 44 | none | lithium perchlorate 1 M/liter | 1.5 |
| 45 | oxalic acid 0.1 M/liter | trichloroacetic acid 0.05 M/liter | 2 |
| 46 | acetyl acetone 2 M/liter | trichloroacetic acid 0.05 M/liter | 2 |

Sample No. 38 comprising butyl alcohol without any additive did not impart the coloring characteristic. Samples No. 39 to 41 and No. 45 and No. 46 incorporating the chelating agent imparted good coloring characteristics. Samples No. 41, No. 45 and No. 46 incorporating trichloroacetic acid for bleaching effect as the additive, had excellent characteristics for coloring in deep at a high bleaching velocity.

Tests 47 to 54:

The samples were prepared by using butyl alcohol as the solvent, and incorporating thiosalicylic acid as a chelating agent at a ratio of 0.1 M/liter; and tribromoacetic acid as a bleaching stabilizer at a ratio of 0.05 M/liter and each of various iodine compound at a ratio of 0.1 M/liter and the devices were driven at a voltage of 1V. The kinds of the iodine compounds are shown in Table 8.

TABLE 8

| Sample No. | Iodine compound |
|---|---|
| 47 | none |
| 48 | iodine |
| 49 | lithium iodide |
| 50 | manganese iodide |
| 51 | nickel iodide |
| 52 | zinc iodide |
| 53 | ammonium iodide |
| 54 | monoiodoacetic acid |

9

# O 038 165

Sample No. 47 which did not contain any iodine compound imparted excellent bleaching stability at 2V but imparted only slight coloring at 1V. On the other hand, Sample No. 48 to No. 54 respectively imparted deep coloring at 1V.

Tests No. 55 to 60:

The samples were prepared by using butyl alcohol as a solvent and incorporating lithium iodide as the iodine compound at a ratio of 0.1 M/liter and the chelating agent at a ratio of 0.1 M/liter and the bleaching stabilizer at a ratio of 0.05 M/liter and the devices were driven at a voltage of 1V. The kinds of the chelating agents and the bleaching agents are shown in Table 9.

TABLE 9

| Sample No. | Chelating agent | Bleaching stabilizer |
|---|---|---|
| 55 | none | tribromoacetic acid |
| 56 | thiosalicylic acid | dibromoacetic acid |
| 57 | thiosalicylic acid | tribromomethane |
| 58 | mercaptoethanol | tribromoacetic acid |
| 59 | 2,3-dimethyl mercapto-propanol | tribromoacetic acid |
| 60 | $\beta$-mercaptopropionic acid | tribromoacetic acid |

Sample No. 55 did not contain any chelating agent and had inferior characteristic to those of Sample No. 56 to No. 60. When Sample No. 55 was kept in the floating state, the percent transmission was returned to about 50% after 2 hours and was completely returned after 5 hours. On the contrary, Samples No. 56 to No. 60 impart deep coloring even though a low voltage of only 1 volt was applied. Even though Samples No. 56 to No. 60 were kept in the floating state for 24 hours, the percent transmission was not substantially varied.

Tests No. 61 and No. 62:

Each light controlling device was prepared by incorporating polyvinyl butyral at a ratio of 30 wt.% in the electrolyte layer in Sample No. 61 or incorporating polyacrylic acid at a ratio of 30 wt.% in Sample 62 in the basical structure of Sample 49.

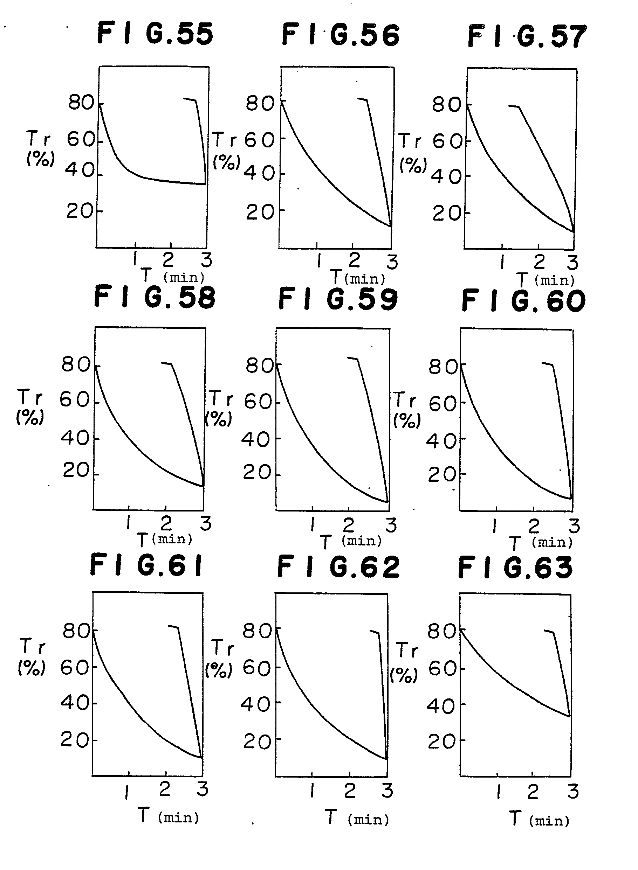

The coloring and bleaching characteristics are excellent as described in Figures 61 and 62. Moreover, Sample No. 61 and No. 62 had remarkably high durability without any liquid leakage because the electrolyte layer was in non-liquid form.

Tests No. 63 to No. 66:

Each sample was prepared by forming a transition metal oxide layer on a counter electrode in the basical structure of Sample No. 49 except forming each layer made of FeO for Sample No. 63, NiO for Sample No. 64 or CuO for Sample No. 65 at a thickness of 500 Å. When the voltage of 1V was applied, the coloring and bleaching characteristics were the same as that of Sample No. 49. Thus, the coloring and bleaching characteristics were measured at a lower voltage of 0.75 V as severe condition. The results are shown in Figures 63 to 65.

The driving voltage was 0.75 V, the coloring characteristics are slightly inferior to the data measured at 1V. When the data of Sample No. 63 and 65 are compared with the data of Sample No. 66 having no transition metal oxide layer (this is the same as Sample No. 49 as a device), the low voltage actuation characteristics of Samples No. 63 to No. 65 are superior to that of Sample No. 66.

Tests No. 67 to No. 69:

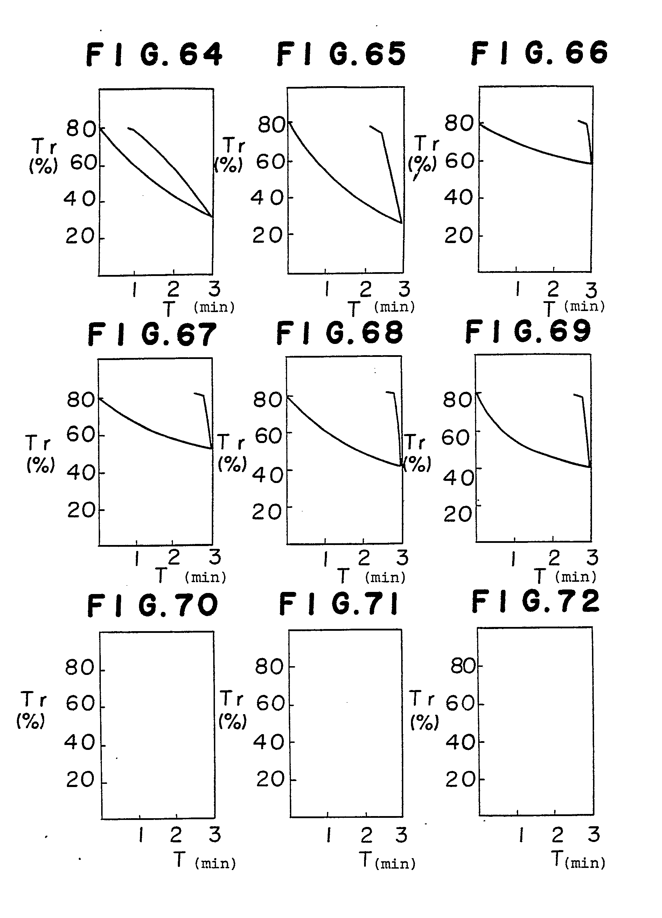

Each sample was prepared by incorporating $LiClO_4$ in Sample No. 67; LiBr in Sample No. 68 or $H_2SO_4$ in Sample No. 69 instead of the iodine compound and the coloring and bleaching characteristics of Samples No. 67 to No. 69 were measured. The results are shown Figures 67 to 69. The samples had no satisfactory coloring characteristics.

In accordance with the present invention, the electro-optical device having excellent coloring and bleaching characteristics can be obtained and especially the electro-optical device having excellent durability without any liquid leakage can be obtained by using a semisolid electrolyte layer using an

10

O 038 165

adhesive or tacky high polymer. The device can be used for various light-controlling devices and can be applied for various fields by adding the other material or the additive if necessary.

**Claims**

1. An electro-optical device comprising a liquid or semisolid electrolyte layer held between a pair of electrodes and a solid electrochromic material placed on at least one of said electrodes, said electrolyte comprising an organic material and a chelating agent, characterized in that said electrolyte layer further comprises iodine or an iodine compound selected from metal or ammonium iodides, iodine-containing carboxylic acids having up to 4 carbon atoms, $C_1$—$C_4$ alkyl iodides and aromatic iodo compounds, in an amount from $5 \times 10^{-3}$ mole $I^{-1}$ up to saturation level.

2. An electro-optical device according to claim 1, characterized in that said electrolyte layer also comprises a chlorine-containing lower carboxylic acid or a bromine compound as a bleaching agent.

3. An electro-optical device according to claim 1 or claim 2, characterized in that said chelating agent is a sulfur-containing compound.

4. An electro-optical device according to any preceding claim, characterized in that the device is a display device.

5. An electro-optical light controlling device comprising a semi-solid electrolyte layer held between a pair of light-transmissive electrodes and solid electro-chromic material placed on at least one of said electrodes, said semisolid electrolyte comprising an organic material and a compound capable of co-ordinating to the metal of the electrode, characterized in that said electrolyte layer also comprises a non-liquid adhesive high polymer, whereby the electrolyte layer adheres to the electrodes, and iodine or an iodine compound selected from metal or ammonium iodides, iodine-containing carboxylic acids having up to 4 carbon atoms, $C_1$—$C_4$ alkyl iodides and aromatic iodo compounds, in an amount from $5 \times 10^{-3}$ mole $I^{-1}$ up to saturation level.

6. An electro-optical light controlling device according to claim 5, characterized in that said co-ordinating compound is a chelating agent.

7. An electro-optical light controlling device according to claim 5 or claim 6, characterized in that said adhesive high polymer is a polyvinyl acetal resin.

8. An electro-optical light controlling device according to claim 7 characterized in that said adhesive high polymer is a polyvinyl butyral resin.

9. An electro-optical light controlling device according to any one of claims 5 to 8, characterized in that said electrolyte layer also includes a bleaching stabilizer of a chlorine-containing lower carboxylic acid or a bromine compound.

10. An electro-optical light controlling device according to claim 6 wherein said chelating agent is a sulfur-containing material.

**Patentansprüche**

1. Elektro-optische Vorrichtung, umfassend eine flüssige oder halbfeste Elektrolytschicht, die zwischen einem Paar Elektroden gehalten wird sowie ein festes elektrochromes Material, das auf mindestens einer der Elektroden angeordnet ist, wobei der Elektrolyt ein organisches Material und ein Chelatisierungsmittel umfaßt, dadurch gekennzeichnet, daß die Elektrolytschicht ferner Jod oder eine Jodverbindung umfaßt, ausgewählt unter Metall- oder Ammoniumjodiden, jodhaltigen Carbonsäuren mit bis zu 4 Kohlenstoffatomen, $C_{1-4}$-Alkyljodiden und aromatischen Jodverbindungen, in einer Menge von $5 \times 10^{-3}$ Mol $I^{-1}$ bis zum Sättigungsniveau.

2. Elektro-optische Vorrichtung nach Anspruch 1, dadurch gekennzeichnet, daß die Elektrolytschicht außerdem eine chlorhaltige niedere Carbonsäure oder eine Bromverbindung als ein Bleichmittel enthält.

3. Elektro-optische Vorrichtung nach Anspruch 1 oder 2, dadurch gekennzeichnet, daß das Chelatisierungsmittel eine schwefelhaltige Verbindung ist.

4. Elektro-optische Vorrichtung nach einem der vorstehenden Ansprüche, dadurch gekennzeichnet, daß die Vorrichtung eine Anzeigevorrichtung ist.

5. Elektro-optische Lichtsteuervorrichtung, umfassend eine halbfeste Elektrolytschicht, die zwischen einem Paar von lichdurchlässigen Elektroden gehalten wird sowie ein festes elektrochromes Material, welches auf mindestens einer der Elektroden angeordnet ist, wobei der halbfeste Elektrolyt ein organisches Material und eine Verbindung mit der Fähigkeit zur Koordinierung an das Metall der Elektrode umfaßt, dadurch gekennzeichnet, daß die Elektrolytschicht außerdem einen nichtflüssigen hochpolymeren Klebstoff umfaßt, wodurch die Elektrolytschicht an den Elektroden anhaftet, sowie Jod oder eine Jodverbindung, ausgewählt aus Metall- oder Ammoniumjodiden, jodhaltigen Carbonsäuren mit bis zu 4 Kohlenstoffatomen, $C_{1-4}$-Alkyljodiden und aromatischen Jodverbindungen, in einer Menge von $5 \times 10^{-3}$ Mol $I^{-1}$ bis zum Sättigungsniveau.

6. Elektro-optische Lichtsteuervorrichtung nach Anspruch 5, dadurch gekennzeichnet, daß die koordinierende Verbindung eine Chelatisierungsmittel ist.

11

7. Elektro-optische Lichtsteuervorrichtung nach Anspruch 5 oder Anspruch 6, dadurch gekennzeichnet, daß es sich bei dem hochpolymeren Klebstoff um ein Polyvinylacetalharz handelt.

8. Elektro-optische Lichtsteuervorrichtung nach Anspruch 7, dadurch gekennzeichnet, daß es sich bei dem hochpolymeren Klebstoff um ein Polyvinylbutyralharz handelt.

9. Elektro-optische Lichtsteuervorrichtung nach einem der Ansprüche 5 bis 8, dadurch gekennzeichnet, daß die Elektrolytschicht außerdem einen bleichenden Stabilisator aus einer chlorhaltigen niederen Carbonsäure oder einer Bromverbindung umfaßt.

10. Elektro-optische Lichtsteuervorrichtung nach Anspruch 6, wobei das Chelatisierungsmittel ein schwefelhaltiges Material ist.

**Revendications**

1. Dispositif électro-optique comprenant une couche d'électrolyte liquide ou semi-solide maintenue entre une paire d'électrodes et une matière électrochromique solide placée sur au moins l'une desdites électrodes, ledit électrolyte comprenant une matière organique et un agent de chélation, caractérisé en ce que ladite couche d'électrolyte comprend en outre de l'iode ou un composé d'iode choisi parmi les iodures de métaux ou d'ammonium, les acides carboxyliques contenant de l'iode renfermant jusqu'à 4 atomes de carbone, les iodures d'alkyle en $C_1$—$C_4$ et les composés iodo aromatiques, en une quantité allant de $5 \times 10^{-3}$ mole $l^{-1}$ jusqu'au niveau de saturation.

2. Dispositif électro-optique selon la revendication 1, caractérisé en ce que ladite couche d'électrolyte comprend également un acide carboxylique inférieur contenant du chlore ou un composé de brome à titre d'agent de blanchiment.

3. Dispositif électro-optique selon la revendication 1 ou 2, caractérisé en ce que ledit agent de chélation est un composé contenant du soufre.

4. Dispositif électro-optique selon l'une quelconque des revendications précédentes, caractérisé en ce que le dispositif est un dispositif d'affichage.

5. Dispositif de réglage électro-optique de la lumière comprenant une couche d'électrolyte semi-solide maintenue entre une paire d'électrodes transmettant la lumière et une matière électrochromique solide placée sur au moins l'une desdites électrodes, ledit électrolyte semi-solide comprenant une matière organique et une composé capable de coordination avec le métal de l'électrode, caractérisé en ce que ladite couche d'électrolyte comprend également un haut polymère adhésif non liquide, de sorte que la couche d'électrolyte adhère aux électrodes et de l'iode ou un composé d'iode choisi parmi les iodures de métaux ou d'ammonium, les acides carboxyliques contenant de l'iode renfermant jusqu'à 4 atomes de carbone, les iodures d'alkyle en $C_1$—$C_4$ et les composés iodo aromatiques en une quantité allant de $5 \times 10^{-3}$ mole $l^{-1}$ jusqu'au niveau de saturation.

6. Dispositif de réglage électro-optique de la lumière selon la revendication 5, caractérisé en ce que ledit composé de coordination est un agent de chélation.

7. Dispositif de réglage électro-optique de la lumière selon la revendication 5 ou 6, caractérisé en ce que ledit haut polymère adhésif est une résine de polyvinylacétal.

8. Dispositif de réglage électro-optique de la lumière selon la revendication 7, caractérisé en ce que ledit haut polymère adhésif est une résine de polyvinylbutyral.

9. Dispositif de réglage électro-optique de la lumière selon l'une quelconque des revendications 5 à 8, caractérisé en ce que ladite couche d'électrolyte contient également un stabilisant de blanchiment constitué par un acide carboxylique inférieur contenant de chlore ou un composé de brome.

10. Dispositif de réglage électro-optique de la lumière selon la revendication 6, dans lequel ledit agent de chélation est une matière contenant du soufre.

# F I G. 10

# F I G. 11

# F I G. 12

# F I G. 13

# F I G. 14

# F I G. 15

# F I G. 16

# F I G. 17

# F I G. 18

# 0 038 165

## F I G.19

Tr (%)

80
60
40
20

1  2  3
T (min)

## F I G.20

Tr (%)

80
60
40
20

1  2  3
T (min)

## F I G.21

Tr (%)

80
60
40
20

1  2  3
T (min)

## F I G.22

Tr (%)

80
60
40
20

1  2  3
T (min)

## F I G.23

Tr (%)

80
60
40
20

1  2  3
T (min)

## F I G.24

Tr (%)

80
60
40
20

1  2  3
T (min)

## F I G.25

Tr (%)

80
60
40
20

1  2  3
T (min)

## F I G.26

Tr (%)

80
60
40
20

1  2  3
T (min)

## F I G.27

Tr (%)

80
60
40
20

1  2  3
T (min)

3

FIG.28  FIG.29  FIG.30

FIG.31  FIG.32  FIG.33

FIG.34  FIG.35  FIG.36

# FIG. 37

# FIG. 38

# FIG. 39

# FIG. 40

# FIG. 41

# FIG. 42

# FIG. 43

# FIG. 44

# FIG. 45

5

# F I G.46

# F I G.47

# F I G.48

# F I G.49

# F I G.50

# F I G.5I

# F I G.52

# F I G.53

# F I G.54

FIG.55  FIG.56  FIG.57

FIG.58  FIG.59  FIG.60

FIG.61  FIG.62  FIG.63

# F I G. 64   F I G. 65   F I G. 66

Tr (%)

Tr (%)

Tr (%)

T (min)

# F I G. 67   F I G. 68   F I G. 69

Tr (%)

Tr (%)

Tr (%)

T (min)

# F I G. 70   F I G. 71   F I G. 72

Tr (%)

Tr (%)

Tr (%)

T (min)